# EUROPÄISCHE PATENTANMELDUNG

(11) **EP 3 263 895 A1**
(43) Veröffentlichungstag der Anmeldung: **03.01.2018**
(21) Anmeldenummer: 16001470.0
(22) Anmeldetag: 01.07.2016
(51) Int. Cl.: F03G 3/00, F03G 7/10

(54) **GRAVITATIONSKRAFT-ANTRIEBSGETRIEBE**

(71) Anmelder: Preglau, Otto, 9062 Moosburg (AT)
(72) Erfinder: Preglau, Otto, 9062 Moosburg (AT)

(57) **Zusammenfassung**

Es ist möglich mittels der Gravitationskraft F_{G} Energie zu lukrieren, was die verschiedenen Arten von Wasserturbinen zeigen.

Beim neuartigen Getriebe, dem Gravitationskraft-Antriebsgetriebe wird mittels der Gravitationskraft F_{G} einer Stangen-Balken-Konstruktion, die die integrierte Spindelmutter (9) trägt über die drehende Spindel (10), die ihre Dre hung im Uhrzeigersinn durch die wirkende Gravitationskraft F_{G} erreicht, die Getriebeeinheit in Form einer Sinuskurve gegen den Uhrzeigersinn beschleunigt.

Der Gravitationsdruck F_{G} an der Gewindemutter (9) bewirkt eine Drehung der Spindel (10) im Uhrzeigersinn und somit auch infolge der Wirkverbindung an der große gelagertenscheibe (11).

Infolge der elastischen Wirkverbindung, einer Zugfeder (12) an der großen oben genannten Scheibe (11), an ihrer Peripherie, und dem Hebel (13), der angeflanscht am kleinen translatorisch geführten Kettenrad (14) (*ϕ* = 0) sitzt, wird die oben genannte Zugfeder (12) entsprechend der wirkenden Zugkraft F_{Z} angespannt.

Das oben genannte kleine Kettenrad (14) ist über eine Umlaufkette (15) mit dem zentralen gleich kleinem, drehfest an der Zentralachse (1) sitzenden, Kettenrad (16) wirkverbunden, wodurch das periphere (14), wie schon oben hingewiesen eine Translationsbewegung (ϕ = 0) zeigt.

Wird also an der Spindel (10) ein Drehmoment M im Uhrzeigersinn eingeleitet, mit Anspannung der Zugfeder (12), so wird am Hebel (13) und so auch am Abtriebsrad (18) ein Drehmoment gegen den Uhrzeigersinn aufgebracht, mit einer sinusartigen Rotation der Getriebeeinheit.

Infolge dessen muß es vorgesehen sein sechs bis acht Getriebeeinheiten übereinander zu positionieren, um phasenverschoben Arbeit zu leisten, was eine Glättung der Sinuskurven und einen gleichmäsigen Umlauf der Getriebeeinheit verspricht.

## Beschreibung

Bei seinen Forschungsarbeiten hat der Physiker Nicolas Leonard Sadi Carnot als Erster den Wirkungsgrad von Dampfmaschinen ent deckt und der Arzt und Physiker Robert julius Mayer 1842 beiseinen Arbeiten in der Thermodynamik den Energieerhaltungssatz formuliert.

Jede thermodynamische Maschine liefert auch die empirische Erfahrung, dass der Lehrsatz von der Energie bei den mit Wärme betriebenen Geräten absolut stimmt.

Es wurde aber bis heute weder in der Mechanik noch in der Getriebelehre der Beweis erbracht, dass der 1. Hauptsatz der Thermodynamik für alle auch in Zulunft gebauten Arbeits- und Antriebsmaschinen, sowie Getriebe gilt.

Da die Arbeitsmaschinen allesamt aus einem ortsfesten Teil, dem Stator (Drehwinkel ϕ= 0) und dem drehenden Teil, dem Rotor, der mit dem Antriebsrad wirkverbunden ist, bestehen, treten bei der Arbeitsverrichtung der Maschinen am Antriebsrad entsprechende Kräfte auf, die der Drehrichtung entgegen wirken und somit unter Energieaufwand überwunden werden müssen.

Deshalb ist es Ziel der Erfindung bessere Wirkungsgrade bei der Umwandlung von mechanischer Arbeit in elektrischen Strom oder Druckenergie zu erreichen.

Auch kann z.B. bei einem Planetengetriebe usw. durch Einleitung eines reinen Drehmoments, (zwei gleich große antiparallele Kräfte) in einen, in einer Kreisbahn translatorisch geführten Körper, niemals Energie zugeführt werden. (M x ϕ = 0)

Heutzutage wird die Gravitationskraft F_{G} mittels Wasser genutzt, indem Pelton- und Kaplanturbinen eingeseztt werden, die mit Hilfe von Generatoren elektrischen Strom erzeugen.

Mit der Erfindung soll eine Vorrichtung auch mit Hilfe der Schwerkraft eine Beschleunigung erfahren und zwar durch eine Spindel mit sehr steilem Gewinde und einer sehr schweren Spindelmutter, wobei die Gravitationskraft F_{G} zur Einleitung der Rotation und zur Arbeitsverrichtung, als Gravitations-Kraft-Motor, eingesetzt wird.

Gelöst ist die gestellte Aufgabe dadurch, als das Gegenmoment des Stators eine Drehumkehr erfährt und dadurch einen zweiten, also zusätzlichen gleich großen Trieb in das System einbringt und zwar in Form einer Sinuskurve.

Der Grundaufbau besteht grundsätzlich aus einer ortsfesten Zentralachse, an der zwei kleine Kettenräder drehfest montiert sind, wobei diese jeweils mittels je einer Umlaufkette, mit zei kleinen Kettenrädern antriebsverbunden sind, und die somit an je einer gelagerten Welle eine Translationsbewegung (ϕ= 0) in einer Kreisbahn erreichen, sowie gelagert zwei Hebel, die jeweils den Antriebsteil eines Elektromotors tragen.

Wie oben bereits angedeutet tragen die peripheren und gleich kleinen und translatorisch geführten Kettenräder (ϕ = 0) je einen Hebel, der elastisch mittels Zugfeder mit je einer großen gelagerten Scheibe antriebsverbunden ist und diese angeflanscht an den beiden Statoren der beiden Elektromotoren sitzen.

Infolge der beschriebenen Antriebsteile und der beigefügten Zeichnungen kann gezeigt werden, dass einer der beiden Hebel das Abtriebsrad trägt.

Außerdem kann es auch demonstriert werden, dass durch Einbeziehung der beiden Statoren der Elektromotoren eine zusätzliche Antriebskraft F_{A} bei dem neuartigen Elektro-Antriebsgetriebe erreichbar ist.

Zusammengefaßt heißt das, dass neben dem an den Hebeln angeflanschten Rotoren der Elektromotoren die beiden Hebeln abwechselnd im Uhrzeigersinn angetrieben werden (M_{Rotor}) und das Abtriebsrad beschleunigen, was aber infolge ihrer Drehumkehr auch für die beiden Statoren gilt und damit auch für das beaufschlagte Drehmoment (M_{Stator}) in die gleiche Richtung wie an den beiden Hebeln, wobei die Rotationsenergie jeweils in Form einer Sinuskurve in das Getriebe eingebracht wird. (M_{Rotor} + M_{Stator} = M_{R+S})

Ist der oben genannte Hebel aber vertikal gelagert und als Scheibe ausgebildet, so ist es möglich das erforderliche Drehmoment M_{S} mittels einer Spindel als Hauptarbeitswelle einzuplanen und mit Hilfe der oben genannten Gravitationskraft F_{G}, also somit ein Drehmoment M_{Stator} in Form einer Sinuskurve in das Getriebe einzubringen, so ist eine Kontinuierliche Rotation der oben genannten Scheibe absolut möglich.
Da die Rotationsenergie in Form von Sinuskurven in das System eingebracht werden kann, ist es auch sinnvoll und vorgesehen, sechs bis acht Antriebseinheiten phasenverschoben und übereinander zu positionieren, wo sie Arbeit leisten und auch die einzelnen Sinuskurven geglättet an den Verbraucher weiterzuleiten.

Die Möglichkeiten ein Getriebe zu entwickeln bei dem neben dem Rotor auch der Stator, aber auch der Stator allein, zur Abgabe von Rotationsenergie genutzt wird, soll anschließend anhand der beigefügten Zeichnungen nun erläutert werden.

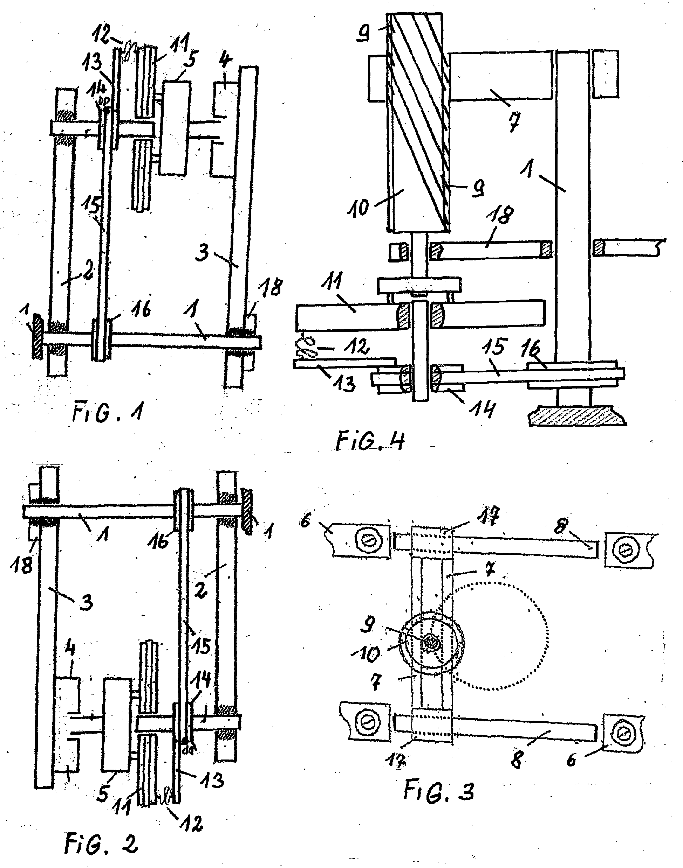

Fig. 1 und Fig. 2 zeigen zwei Übersetzungsgetriebe in perspektivischer Ansicht die einzeln aber auch gemeinsam an der Zentralachse (1) lagern können, und einerseits mittels der beiden Hebeln (2 und 3) angeflanschten Rotoren (4) der Elektromotoren das System beschleunigen, wobei aber auch die Statoren (5) infolge Drehumkehrs zusätzlich die Rotation der Hebel (2) verstärken und zwar in Form einer Sinuskurve.

Fig. 3 soll die vier Steher (6) mit der Stangen (6)-Balken (8)-Konsstruktion, die auf und ab verschiebbar gelagert ist, von oben gesehen, darstellen und ist mit einer Gewindemutter (9) armiert, die die Spindel (10) trägt und die Gravitationskraft F_{G} das erforderliche Drehmoment M in das System einbringt und somit das Getriebe rotierrend antreibt, damit die Rotationsenergie an Arbeitsmaschinen weiterleitet werden kann und mittels Schlitten (17) die Spindel (10) im Kreis geführt wird.

Fie. 4 soll die Funktion des neuartigen Getriebes beschreiben, wobei die Rotationsenergie mittels einer Spindel (10) erreicht wird, angetrieben mittels der Gravitationskraft F_{G} der Stangen (7)-Balken (8)-Konstruktion und der Wirkverbindung mit einer Gewindemutter (9) an der oben genannten Stangen-Balken-Konstruktion mit Weiterleitung der eingeleiteten Rotationsenergie in eine schon oben genannten, gelagerten großen Scheibe (11).

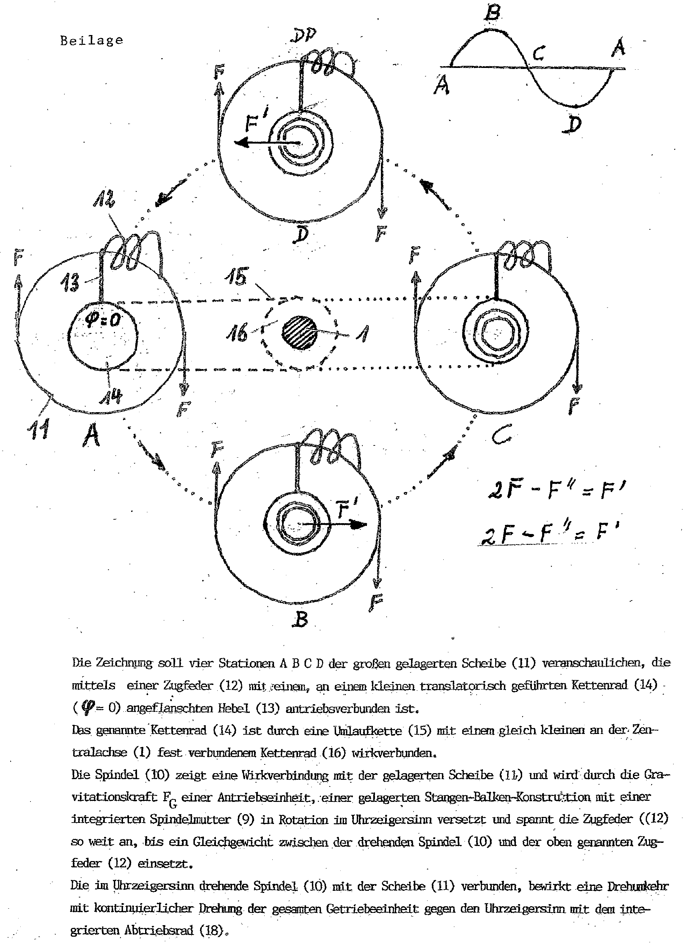

Fig. 5 veranschschaulicht abschließend bildlich, dass das in das System eingebrachte Drehmoment M an der großen gelagerten Scheibe (11), die mittels Zugfeder (12) mit einem Hebel (13) an einem kleinen Kettenrad (14) angeflanscht sitzt und das genannte Kettenrad (14) über eine Umlaufkette (15) mit einem gleich kleinen, an der ortsfesten Zentralachse (1) drehfest sitzenden Kettenrad (16) in Antriebsverbindung steht, aber auch das Abtriebsrad (18) an der Zentralachse (1) lagert.

## Patentansprüche

1. Gravitationskraft-Antriebsgetriebe **dadurch gekennzeichnet, dass**
mittels der Gravitationskraft F_{G} von einer, an Stehern (6) gelagerte Stangen (7)-Balken (8)-Konstruktion mit integrierter Spindelmutter (9), die bei einem Druck nach unten, ein absolut reines Drehmoment M im Uhrzeigersinn an der Spindel (10) und somit am Getriebe, sowie an der gelagerten großen Scheibe (11) beaufschlagt wird.

2. Gravitationskraft-Antriebsgetriebe nach Anspruch 1, **dadurch gekennzeichnet, dass**
das Getriebe aus dem Antriebsteil, der Stangen-Balken-Konstruktion mit integrierter Gewindemutter (9) und dem Arbeitsteil, der Spindel (10) mit den angeschlossenen Getriebeteilen besteht.

3. Gravitationskraft-Antriebsgetriebe nach den Ansprüchen 1 und 2 **dadurch gekennzeichnet, dass**
durch die Drehung der Spidel (10) im Uhrzeigersinn und somit an der großen Scheibe (11) ein reines Drehmoment M im Uhrzeigersinn (zwei gleich große antiparallele Kräfte M = F - F) mit Dehnung der integrierten Zugfeder (12) zwischen der großen, gelagerten Scheibe (11) und dem angeflanschten Hebel (13), an dem kleinen translatorisch geführten Kettenrad (14) (ϕ = 0) fixiert ist, wodurch somit kontinuierlich Rotationsenergie in das System eingebracht wird, in Form einer Sinuskurve.

4. Gravitationskraft-Antriebsgetriebe nach einem der Ansprüche 1 bis 3 **dadurch gekennzeichnet, dass** das
genannte translatorisch geführte kleine Kettenrad (ϕ= 0) (14) durch eine Umlaufkette (15) mit einem gleich kleinen Kettenrad (16), das drehfest an der Zentralachse (1) sitzt, verbunden ist.

5. Gravitationskraft-Antriebsgetriebe nach einem der Ansprüche 1 bis 4 **dadurch gekennzeichnet, dass**
die gesamte Getriebeeinheit und somit auch das Abtriebsrad (18) gegen den Uhrzeigersinn beschleunigt wird und somit kontinuierlich Rotationsenerie an eine Arbeitsmaschine abgibt, wobei es vorgesehen sein kann sechs bis acht Getriebeeinheiten übereinander zu positionieren und phasenverschoben arbeiten zu lassen, wodurch die Sinuskurven geglättet an eine Arbeitsmaschine geliefert werden kann.
